## Europäisches Patentamt

## European Patent Office

## Office européen des brevets

(19)

(11) Veröffentlichungsnummer: **0 073 739**
**A1**

(12) **EUROPÄISCHE PATENTANMELDUNG**

(21) Anmeldenummer: **82810351.5**

(22) Anmeldetag: **24.08.82**

(51) Int. Cl.³: **A 47 J 31/40**

(30) Priorität: **26.08.81 CH 5511/81**

(43) Veröffentlichungstag der Anmeldung: **09.03.83**
Patentblatt **83/10**

(84) Benannte Vertragsstaaten: **AT BE CH DE FR GB IT LI LU NL SE**

(71) Anmelder: **M. Schaerer A.G., Quellenweg 4-6, CH-3084 Wabern (Kanton Bern) (CH)**

(72) Erfinder: **Rais, Arnold, Hirzbrunnenallee 7, CH-4058 Basel (CH)**

(74) Vertreter: **Bovard, Fritz Albert et al, Bovard & Cie Patentanwälte VSP Optingenstrasse 16, CH-3000 Bern 25 (CH)**

(54) **Kaffeemaschine und Verfahren zu ihrem Betrieb.**

(57) In einem zylindrischen Gehäuse 1 ist ein axial beweglicher Arbeitskolben 2 gelagert. Der Arbeitskolben besitzt einen Steuerteil 5 und einen Arbeitsteil 6. Vor dem Arbeitskolben 2 münden eine Brühwasserzuleitung 20, ein Kaffeepulverbeschickungskanal 14 sowie ein Kaffeeauslass 9 in das Innere des Zylinders. Zum Zwecke einerseits der Verbesserung des Kaffeearomas und andererseits zur Vermeidung der Ausstossung nassen Kaffeesatzes begrenzen die eine Stirnseite des Arbeitsteiles 6 des Arbeitskolbens 2 sowie ein bewegliches Abschlussorgan 7 einen als Brühkammer 4 dienenden Zylinderraum. Der Kaffeeauslauf 9 mündet radial in diesen Zylinderraum. Das Kaffeeauslassventil 11 wird erst geöffnet, wenn der Druck innerhalb des Zylinderraumes 4 einen bestimmten Wert erreicht hat.

EP 0 073 739 A1

0073739

Kaffeemaschine und Verfahren zu ihrem Betrieb

Das Bestreben jedes Kaffeemaschinenbauers ist die Konstruktion einer Maschine, die die Herstellung eines möglichst aromatischen und gehaltvollen Kaffees gestattet. Der Gehalt an Aromastoffen, der zu diesen Qualitäten führt, ist u.a. abhängig einerseits von der Brühwassermenge und andererseits von der Brühzeit, dem Druck in der Brühkammer und der Möglichkeit, insbesondere den letzten Teil des mit dem Kaffeepulver in Berührung stehenden Brühwassers dem Konsumenten zuzuführen.

Ein Nachteil der meisten heute bekannten Kaffeemaschinen besteht weiter darin, dass der Kaffeesatz in nasser Form ausgestossen wird.

Der vorliegenden Erfindung liegt nun die Aufgabe zugrunde, eine Kaffeemaschine mit einem in einem zylindrischen Gehäuse axial beweglichen Arbeitskolben mit einem Steuerteil und einem Arbeitsteil, wobei vor dem Arbeitskolben in das Innere des Zylinders eine Brühwasserzuleitung, ein Kaffeepulverbeschickungskanal sowie ein Kaffeeauslass münden, zu schaffen, bei welcher sich der Druck in der Brühkammer und damit die Verweilzeit des Brühwassers in Gegenwart des Kaffeepulvers vergrössern lässt, und welche gleichzeitig gestattet, den Kaffeesatz in trockener Form auszustossen.

Diese Aufgabe wird erfindungsgemäss dadurch gelöst, dass durch die eine Stirnseite des Arbeitsteiles des Arbeitskolbens sowie ein bewegliches Abschlussorgan ein Zylinderraum begrenzt wird, in welchem der mit einem Druckventil versehene Kaffeeauslass radial einmündet.

Die betreffenden Aufgaben können in besonders zweckmässiger Weise durch die Anwendung eines Verfahrens zum Betriebe einer solchen Kaffeemaschine gelöst werden, welches dadurch gekennzeichnet ist, dass nach der Oeffnung des Kaffeeauslassventils und der Entleerung des Zylinderraumes der Arbeitskolben zur Zusammenpressung des Kaffeesatzes gegen das Abschlussorgan hin verschoben und anschliessend das Abschlussorgan so bewegt wird, dass es den Zylinderraum auf der dem Kolben abgewendeten Seite freigibt, worauf man zur Ausstossung des sich im Zylinderraum befindlichen Kaffeesatzes den Arbeitskolben in Richtung auf die Oeffnung des Zylinderraumes bewegt.

In der Zeichnung ist eine beispielsweise Ausführungsform der betreffenden Kaffeemaschine dargestellt, und in der Folge wird eine beispielsweise Ausführungsart des erfindungsgemässen Verfahrens näher erläutert werden.

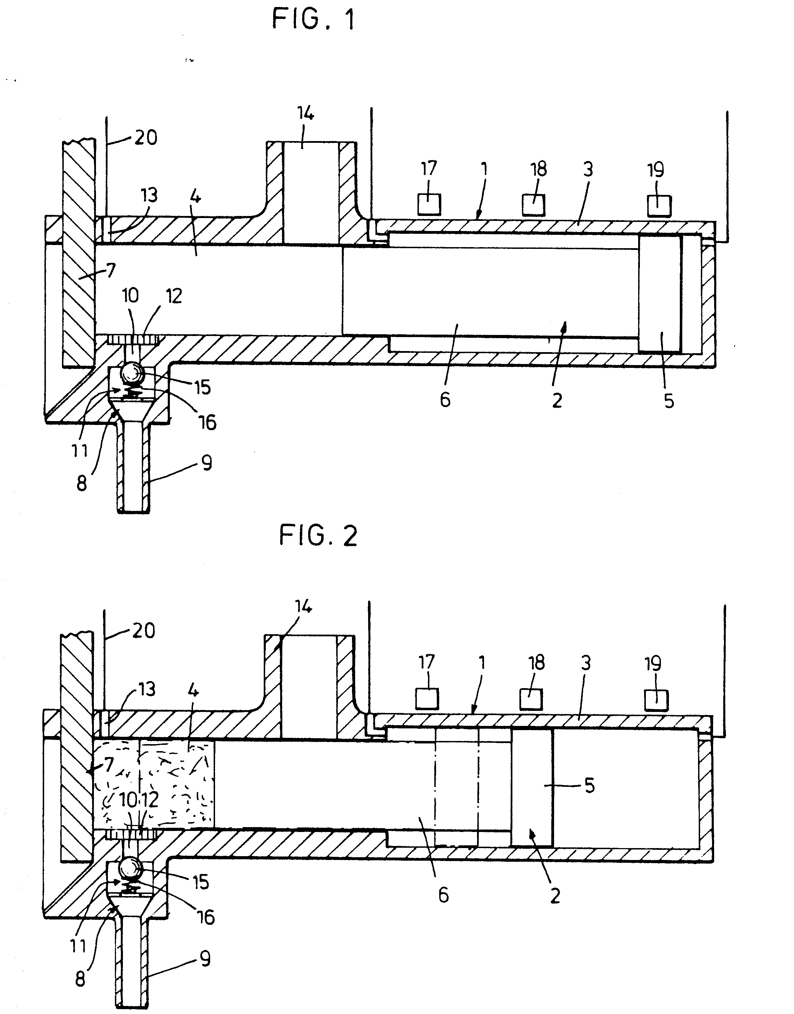

Die Zeichnungen Fig. 1, Fig. 2, Fig. 3 und Fig. 4 zeigen schematisch je einen Schnitt durch das zylindrische Gehäuse eines Ausführungsbeispieles der betreffenden Kaffeemaschine sowie die zu deren Betrieb notwendigen Zuleitungen zu einer Reihe von Arbeitsstellungen des Arbeitskolbens innerhalb des zylindrischen Gehäuses.

Die Kaffeemaschine besitzt ein zylindrisches Gehäuse 1, innerhalb welchem der Arbeitskolben 2 axial beweglich angeordnet ist. Das Gehäuse 1 ist in einen Steuerteil 3 grösseren Durchmessers und eine Brühkammer 4 geringeren Durchmessers unterteilt, wobei der Steuerteil 3 der beweglichen Lagerung des Steuerkopfes 5 des Arbeitskolbens 2

- 3 -　　　　　0073739

dient, während in der Brühkammer 4 der Arbeitsteil
6 des Arbeitskolbens 2 verschiebbar gelagert ist.
Auf der in der Zeichnung linken Seite ist die Brühkammer 4 des Gehäuses 1 durch den Schieber 7 abgeschlossen, der auf nicht dargestellte Weise rechtwinklig zur Gehäuseachse so weit bewegt werden kann,
dass er die in der Zeichnung linke Seite der Brühkammer 4 völlig freigibt. Unmittelbar anschliessend
an den Schieber 7 ist in Richtung gegen das Innere
des Gehäuses 1 zu der Kaffeeauslass 8 angeordnet, der
einen radialen Auslasskanal 9 besitzt, der über die
Bohrung 10 mit dem Innern der Brühkammer 4 verbunden
ist, wobei die Bohrung 10 auf ihrer Auslasseite durch
ein federbelastetes und so als Druckventil ausgebildetes Ventil 11 abgeschlossen werden kann, während auf
der Gegenseite zwischen der Brühkammer 4 und der Bohrung 10 das Sieb 12 angeordnet ist.

Beim dargestellten Ausführungsbeispiel ist das
Druckventil schematisch als Kugelventil gezeichnet,
wobei die Kugel 15 durch die Feder 16 gegen die äussere Mündung der Bohrung 10 angedrückt ist. Es ist aber
selbstverständlich, dass das Druckventil 11 beliebig
ausgebildet sein kann, solange es bei einem durch die
Wahl der Feder vorbestimmten Druck die Bohrung 10 freigibt. Des weiteren wäre es auch denkbar, die Oeffnung
des Druckventils zwangsläufig herbeizuführen, beispielsweise durch die mechanische Verbindung mit einem den betreffenden Druck erzeugenden Konstruktionselement.

In die Brühkammer 4 mündet weiter die Bohrung 13
für den Brühwassereintritt sowie der Kaffeepulverbeschickungskanal 14. Die Brühwasserleitung ist mit 20
bezeichnet. Auf der Aussenseite des Steuerteiles 3 des
Gehäuses 1 sind in an sich bekannter Weise drei Sensoren 17-19 angeordnet, die zur Bestimmung von drei verschiedenen Stellungen des Arbeitskolbens 2 mit dessen Steuerkopf 5 zusammenarbeiten. Anstelle der Sensoren könnten auch andere Mittel zur Festlegung der verschiedenen Stellungen des Arbeitskolbens 2 Verwendung finden, wie beispielsweise eine mit dem Arbeitskolben verbundene Zahnstange, die mit einem um einen bestimmten Betrag verdrehten Ritzel zusammenarbeiten.

Die Wirkungsweise der beschriebenen Kaffeemaschine ist die folgende:

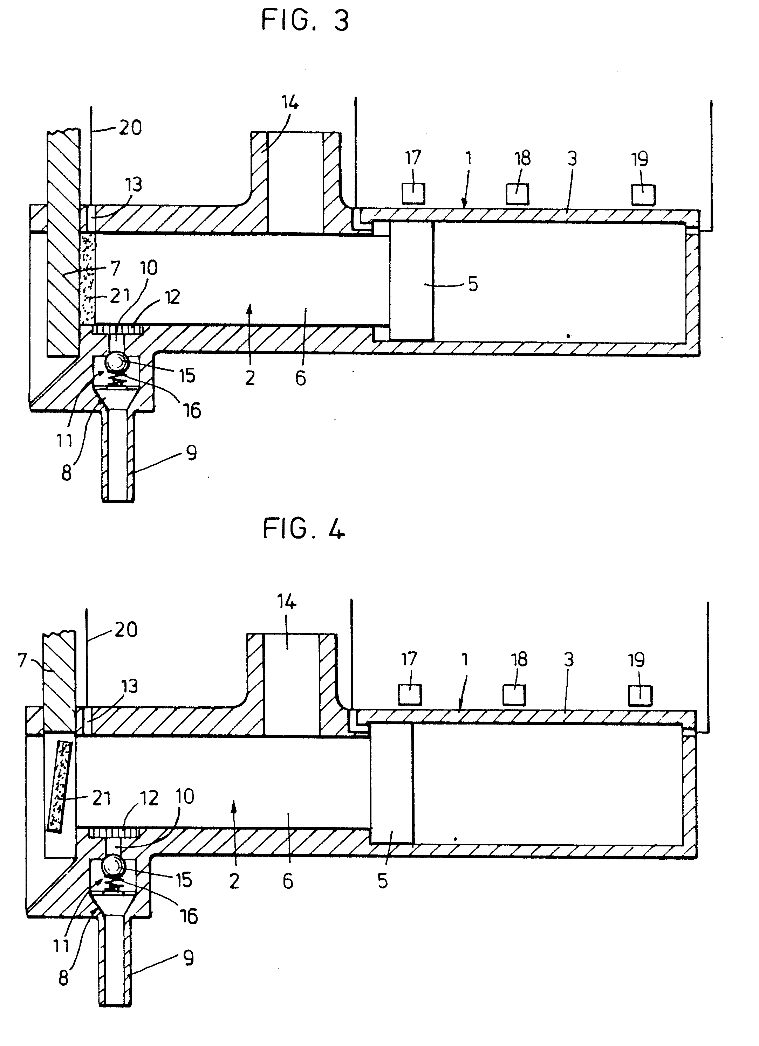

Fig. 1 zeigt die Ausgangslage, in welcher der Arbeitskolben 2 durch die Zusammenarbeit des Sensors 19 mit dem Steuerkopf 5 gehalten ist. Der Schieber 7 ist geschlossen, ebenso wie der Kaffeepulverbeschickungskanal 14 und die Brühwasserzuleitung 20. In dieser Stellung wird der Kaffeepulverbeschickungskanal 14 geöffnet, bzw. die Verbindung zu einer nicht dargestellten, am Anfang des Kaffeepulverbeschickungskanals angeordneten Kaffeemühle hergestellt und die gewünschte Menge Kaffeepulver in die Brühkammer 4 eingegeben. Anschliessend erfolgt auf nicht dargestellte Weise die Bewegung des Arbeitskolbens 2 nach links in die in Fig. 2 gestrichelt dargestellte Lage, in welcher das Kaffeepulver zusammengedrückt wird, wobei das zusammengedrückte Kaffeepulver die in Fig. 2 dargestellte gestrichelte Stellung insofern bestimmt, als der Kolben durch dieses Kaffeepulver in seiner Bewegung in Fig. 2 nach links arretiert wird. In dieser Stellung wird nun durch die Bohrung 13 das Brühwasser in die durch die Gehäuseinnenwand und einerseits den Schieber 7 und andererseits den Arbeitskolben 2 begrenzte Brühkammer 4 eingegeben, durch welches Brühwasser der Arbeitskolben 2 in Fig. 2 nach rechts bewegt und beispielsweise durch den Sensor 18 in der in Fig. 2 mit ganzem Strich dargestellten Lage gehalten wird. Während dieser Rückzugsbewegung des Arbeitskolbens 2 von der in Fig. 2 gestrichelt dargestellten linken Lage in die mit vollem Strich gezeichnete Mittellage (durch das Mass dieser Rückzugsbewegung und das abzugebende Kaffeequantum bestimmt) erfolgt eine intensive Durchmischung von Brühwasser und Kaffeepulver, welches letzte in der Brühkammer aufgewirbelt wird und so in eine intensive Berührung mit dem Brühwasser gelangt. Anschliessend wird der Arbeitskolben 2 hydraulisch auf nicht weiter dargestellte Weise in die äusserste linke Lage gemäss Fig. 3 vorgestossen, wodurch einerseits das Kaffeepulver noch zusätzlich ausgepresst wird, und andererseits der Druck in der Brühkammer 4 weiter ansteigt. Durch die zusätzliche Auspressung wird erreicht, dass die am stärksten gebrühten Teile nicht mit dem Kaffeesatz weggeschwemmt, sondern dem Brühgetränk zugeführt werden, während mit dem steigenden Druck in der Brühkammer sich die Brühwirkung des Brühwassers in dem Sinne verbessert, dass ein erhöhter Brühkammerdruck zu einem stärkeren Brühgetränk führt. Dieser Druck kann nun je nach der gewünschten Kaffeequalität eingestellt werden, und zwar einerseits durch die Grösse des Vorschubes des Arbeitskolbens 2 und andererseits durch die Konstruktion des Druckventils 11, welches letzte bei entsprechender Wahl der Federkraft der Feder 16 den Auslasskanal 9 freigibt, sobald der der gewünschten Kaffeequalität entsprechende und frei wählbare Druck erreicht ist.

Anstelle der Wahl des Anpressdruckes der Ventilkugel 15 kann bei einem andersgearteten, beispielsweise einem Schieberventil, auch eine zwangsläufige Steuerung treten, in dem Sinne, dass wenn der Arbeitskolben 2 von der in Fig. 2 dargestellten Lage in diejenige nach Fig. 3 gestossen wird, das Ventil 11 sich öffnet.

Nach Erreichen der linken Lage gemäss Fig. 3 durch den Arbeitskolben 2 wird auf nicht weiter dargestellte Weise der Schieber 7 zur Oeffnung der Brühkammer 4 hochgezogen, so dass dann durch eine auf ebenfalls nicht dargestellte Weise hydraulisch verursachte letzte Bewegung des Arbeitskolbens 2 in Fig. 4 nach links der zu einer Art Tablette 21 zusammengedrückte und trockene Kaffeesatz aus der Kaffeemaschine ausgestossen wird.

Auf diese Weise gelingt es, den Druck in der Brühkammer und damit die Verweilzeit von Brühwasser und Kaffeepulver praktisch beliebig zu erhöhen und weiter durch eine völlige Auspressung des Brühwassers aus dem Kaffeesatz ein hocharomatisches Brühgetränk herzustellen und gleichzeitig den Kaffeesatz in getrocknetem Zustand aus der Kaffeemaschine auszustossen.

Patentansprüche

1. Kaffeemaschine mit einem in einem zylindrischen Gehäuse axial beweglichen Arbeitskolben mit einem Steuerteil und einem Arbeitsteil, wobei vor dem Arbeitskolben in das Innere des Zylinders eine Brühwasserzuleitung, ein Kaffeepulverbeschickungskanal sowie ein Kaffeeauslass münden, dadurch gekennzeichnet, dass durch die eine Stirnseite des Arbeitsteiles des Arbeitskolbens sowie ein bewegliches Abschlussorgan ein Zylinderraum begrenzt wird, in welchem der mit einem Druckventil versehene Kaffeeauslass radial einmündet.

2. Verfahren nach Anspruch 1, dadurch gekennzeichnet, dass nach der Oeffnung des Kaffeeauslassventils und der Entleerung des Zylinderraumes der Arbeitskolben zur Zusammenpressung des Kaffeesatzes gegen das Abschlussorgan hin verschoben und anschliessend das Abschlussorgan so bewegt wird, dass es den Zylinderraum auf der dem Kolben abgewendeten Seite freigibt, worauf man zur Ausstossung des sich im Zylinderraum befindlichen Kaffeesatzes den Arbeitskolben in Richtung auf die Oeffnung des Zylinderraumes bewegt.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | A 47 J 31/40 |
| X | US-A-2 935 011 (PERLMAN) *Insgesamt* | 1,2 | |
| | --- | | |
| X | US-A-3 064 553 (SIMJIAN) *Spalte 3, Zeilen 1-28; Figur 2* | 1,2 | |
| | --- | | |
| A | US-A-3 089 404 (PARRAGA) *Figuren 3-6; Spalten 5,6* | 1,2 | |
| | --- | | |
| A | FR-A-2 347 911 (MOSER) *Insgesamt* | 1,2 | |
| | --- | | |
| A | FR-A-1 414 223 (LOSGUARDI) *Insgesamt* | 1 | |
| | ----- | | |

**RECHERCHIERTE SACHGEBIETE (Int. Cl. 3)**

A 47 J

Der vorliegende Recherchenbericht wurde für alle Patentansprüche erstellt.

| Recherchenort | Abschlußdatum der Recherche | Prüfer |
|---|---|---|
| DEN HAAG | 01-12-1982 | SCHARTZ J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82